# EUROPEAN PATENT SPECIFICATION

(11) **EP 1 687 861 B1**
(45) Date of publication and mention of the grant of the patent: **26.12.2012**
(21) Application number: 04799979.2
(22) Date of filing: 02.11.2004
(51) Int. Cl.: H01M 10/052, H01M 10/058, H01M 2/16, H01M 10/0565

(54) **SEPARATOR COATED WITH ELECTROLYTE-MISCIBLE POLYMER AND ELECTROCHEMICAL DEVICE USING THE SAME**
MIT ELEKTROLYT-MISCHBAREM POLYMER BESCHICHTETES TRENNGLIED UND ELEKTROCHEMISCHE EINRICHTUNG DAMIT
SEPARATEUR REVETU D'UN POLYMERE MISCIBLE DANS UN ELECTROLYTE ET DISPOSITIF ELECTROCHIMIQUE DANS LEQUEL IL EST UTILISE

(30) Priority: 03.11.2003 KR 2003077406
(43) Date of publication of application: 09.08.2006
(73) Proprietor: LG Chem, Ltd., Seoul 150-721 (KR)
(72) Inventor: YONG, Hyun-Hang, Seoul 152-102 (KR); LEE, Sang-Young, Yuseong-gu, Daejeon 305-340 (KR); KIM, Seok-Koo, Daejeon 305-761 (KR); AHN, Soon-Ho, Yuseong-gu, Daejeon 305-707 (KR)
(74) Representative: HOFFMANN EITLE
(86) International application number: PCT/KR2004/002788
(87) International publication number: WO 2005/043649

(56) References cited:
- EP-A1- 1 126 538
- JP-A- 11 273 738
- JP-A- 2003 045 750
- US-A- 4 359 510
- US-A1- 2003 192 170

## Description

### Technical Field

The present invention relates to a separator in which a polymer soluble in a liquid electrolyte is coated on one or both sides of the separator so as to improve battery safety and to prevent deterioration in battery performance, as well as an electrochemical device including the separator and a production method thereof.

### Background Art

Recently, interests in energy storage technology being gradually increased. As the use of batteries is enlarged to applications for the storage of energy for portable telephones, camcorders, notebook computers, personal computers and electric vehicles, efforts in the research and development of the batteries are increasingly encompass on increasingly wider variety of applications. In this view, the field of electrochemical devices receives the greatest attention, and among them, interests in the development of chargeable/dischargeable secondary batteries are focused. Recently, in order to increase the capacity, density and specific energy of such batteries, research and development for the design of new electrodes and batteries are being conducted.

Among secondary batteries which are currently applied, lithium secondary batteries developed in the early 1990s are in the spotlight due to the advantages of higher operation voltages and far greater energy densities than those of conventional batteries, such as Ni-MH, Ni-Cd and sulfuric acid-lead batteries. However, the lithium secondary batteries are disadvantageous in that they have safety problems, such as firing and explosion, caused by the use of organic electrolytes, and their preparation requires a complicated process. A recent lithium ion polymer battery overcomes the disadvantages of the lithium secondary batteries, and thus, is recognized as one of next-generation batteries. However, it has a relatively low capacity as compared to that of the lithium ion secondary battery, and shows insufficient discharge capacity, particularly at low temperature. Thus, there is an urgent need for the improvement of such problems.

It is very important to evaluate and secure the battery safety. The most important consideration is that batteries should not cause damages to users upon miss-operation of the batteries. For this purpose, safety standards for the batteries strictly restrict firing and explosion in the batteries. Thus, many methods to solve the battery safety problem are being proposed.

As more fundamental solutions to solve the battery safety, there are attempts to use polymer electrolytes.

Lithium secondary batteries are classified according to an electrolyte used therein into a lithium ion liquid battery, a lithium ion polymer battery, and a lithium polymer battery, which use a liquid electrolyte, a gel-type polymer electrolyte, and a solid polymer electrolyte, respectively. The battery safety is generally increased in the order of the liquid electrolyte < the gel-type polymer electrolyte < the solid polymer electrolyte, but the battery performance degrades in this order. Thus, it is known that the batteries using the solid polymer electrolyte are not yet commercialized due to this inferior battery performance. Recently, Japan's Sony Corp. (US Patent No. 6,509,123B1) and Sanyo Electric Co. (Japanese Patent Laid-Open Publication No. 2000-299129) developed gel-type polymer electrolytes by their respective unique methods and produce batteries including the same.

The characteristics of these electrolytes and batteries will now be described in brief.

In Japan's Sony Corp, polyvinylidene fluoride hexafluoropropylene (PVDF-HFP) is used as a polymer, and a solution of LiPF₆ in ethylene carbonate (EC) and propylene carbonate (PC) is used as an electrolyte. The polymer and the electrolyte are added to a dimethyl carbonate (DMC) solvent, and the mixture is coated on the surface of an electrode followed by the volatilization of DMC, so as to produce a structure in which the gel-type polymer is introduced onto the electrode. Thereafter, in order to prevent electric short circuits, the structure is wound together with a polyolefin-based separator so as to produce a battery.

Meanwhile, in Japan's Sanyo Electric Co., a battery cell is first produced by a winding process using a cathode(positive electrode), an anode(negative electrode) and a polyolefin-based separator. Polyvinylidene fluoride (PVDF), polymethylmethacrylate (PMMA), polyethylene glycol dimethylacrylate (PEGDMA) and an initiator are mixed with suitable organic carbonate, and the mixture is injected into the produced battery cell. The injected mixture is crosslinked under suitable conditions so as to produce a gel-type polymer electrolyte. In this case, the gel-type polymer electrolyte has a characteristic in that it is formed within the battery cell after assembling of the battery cell.

However, it is known that processes for producing the above-described two kinds of the gel-type polymer electrolytes are highly complicated and have some problems in mass production. Also, such processes encounter limitations in the improvement of the battery performance and safety. Namely, there is a problem in that an increase in the content of the polymer, such as PVDF-HFP, PVDF or PMMA, will lead to an improvement in the battery safety but result in great deterioration in the battery performance.

US 2003/0192170 discloses a process for fabricating a rechargeable polymer battery. In this process, a positive electrode, a negative electrode, a polymer electrolyte and a separator film are provided. Following this, the positive electrode, negative electrode and separator film are coated with the polymer electrolyte and winded together to form a rechargeable polymer battery. The coating and winding can be conducted simultaneously or alternatively, the winding can be conducted after coating.

### Brief Description of the Drawings

FIG. 1 shows that the inventive separator having an electrolyte-soluble polymer coated thereon is dissolved by injection of an electrolyte so as to form a high-viscosity electrolyte which is uniformly distributed in electrodes and the separator.
FIG. 2 is a graph showing changes in the viscosity and ion conductivity of an electrolyte with a change in the concentration of an electrolyte-soluble polymer.
FIG. 3 shows test results for the wettability of an electrolyte-soluble polymer (cyanoethyl pullulan)-coated separator produced in Example 1 with an electrolyte.
FIG. 4 shows test results for the wettability of an electrolyte-soluble polymer (cyanoethyl polyvinylalcohol)-coated separator produced in Example 2 with an electrolyte.
FIG. 5 shows test results for the wettability of an electrolyte-insoluble polymer (PVDF-HFP)-coated separator produced in Comparative Example 1 with an electrolyte.

### Disclosure of the Invention

The prior gel-type polymer electrolytes as described above were those containing the gel-type polymer which is not dissolved in an electrolyte due to the characteristics of their production processes.

However, the present inventors have found that when a method according to claim 11 comprising coating an electrolyte-soluble polymer on one or both sides of a separator material so as to produce a separator according to claim 1, interposing the separator between a cathode and an anode so as to assemble a battery and then injecting an electrolyte into the battery is used, the electrolyte-soluble polymer coated on the separator can be dissolved in the electrolyte after assembling of the battery so as to produce either a gel electrolyte close to a liquid phase or a highly viscous liquid electrolyte, and also this high-viscosity electrolyte can be easily formed by injection of a conventional low-viscosity electrolyte other than direct - injection of a high-viscosity electrolyte. Furthermore, the present inventors have found that, in a battery including such a high-viscosity electrolyte, the battery safety is improved in an alternative way as compared to batteries including a liquid electrolyte whereas deterioration in the battery performance is minimized unlike the prior batteries including the gel-type polymer electrolytes. On the basis of such findings, the present invention has been perfected.

According to a first aspect, the present invention provides a separator for a lithium secondary battery on which an electrolyte-soluble polymer, which is soluble in liquid electrolyte, is coated on one or both surfaces of the separator, wherein the electrolyte-soluble polymer is at least one selected from the group consisting of cyanoethyl pullulan, cyanoethyl polyvinyl alcohol, cyanoethyl cellulose and cyanoethyl sucrose, and the electrolyte-soluble polymer is dissolved after injection of the liquid electrolyte, wherein the high-viscosity electrolyte formed after the electrolyte-soluble polymer coated on the separator is dissolved in the liquid electrolyte contains the electrolyte-soluble polymer in an amount of 0.01-20% by weight based on the composition of the liquid electrolyte before injection of the liquid electrolyte into the battery, the viscosity of this high-viscosity electrolyte being at least 0.01 cP higher at 25°C than that of the electrolyte before the electrolyte-soluble polymer is dissolved in the liquid electrolyte.

According to a second aspect, the present invention provides an electrochemical device comprising a cathode, an anode and a separator in accordance with the above first aspect.

In a third aspect, the present invention provides a method for producing an electrochemical device comprising the steps of:
(a) coating an electrolyte-soluble polymer, which is soluble in liquid electrolyte, on one or both surfaces of a separator, wherein the electrolyte-soluble polymer is at least one selected from the group consisting of cyanoethyl pullulan, cyanoethyl polyvinyl alcohol, cyanoethyl cellulose and cyanoethyl sucrose;
(b) interposing the separator produced in step (a) between a cathode and an anode so as to assemble an electrochemical device; and
(c) injecting a liquid electrolyte into the electrochemical device produced in step (b) whereby the electrolyte-soluble polymer dissolves in the electrolyte to form a high-viscosity electrolyte which contains 0.01-20% by wt. of the electrolyte-soluble polymer based on the composition of the liquid electrolyte before injection of the liquid electrolyte into the electrochemical device, the viscosity of the high-viscosity electrolyte being at least 0.01 cP higher at 25°C than that of the electrolyte before the electrolyte-soluble polymer is dissolved by the liquid electrolyte.

Hereinafter, the present invention will be described in detail.

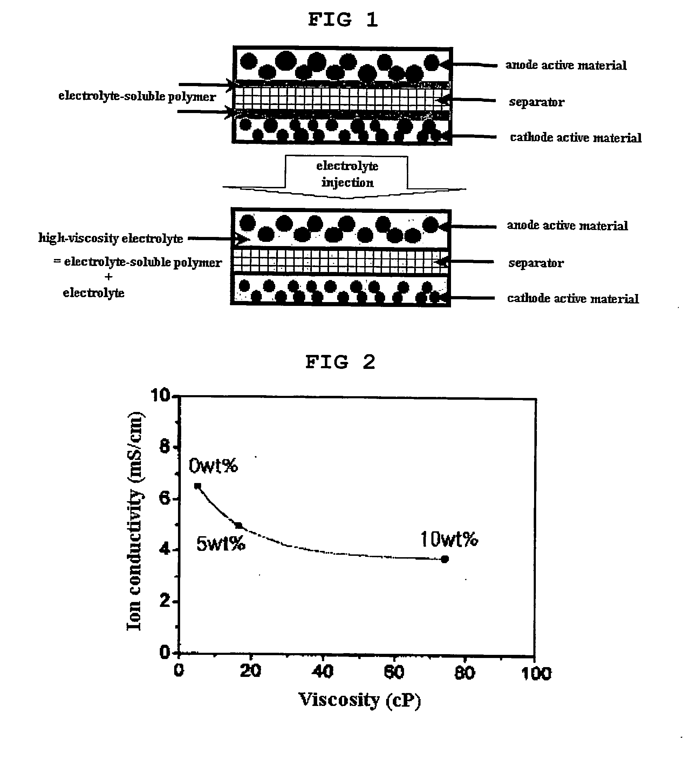

In the present invention, since an electrolyte-soluble polymer, i.e., a functional polymer which is dissolved upon the impregnation of an electrolyte into a battery, is coated on one or both sides of a separator, the electrolyte-soluble polymer is dissolved by injection of the electrolyte after assembling of the battery so as to form an electrolyte (see FIG. 1). This electrolyte is present in either a gel state close to a liquid state or a high-viscosity liquid state, and combines all the advantages of the prior liquid-type and gel-type electrolytes.

Owing to the above-described characteristics, the high-viscosity electrolyte formed by a process where the electrolyte-soluble polymer coated on one or both sides of the separator according to the present invention is dissolved by injection of the electrolyte can achieve not only an improvement in the battery safety but also the prevention of deterioration in the battery performance.

First, the present invention allows an improvement in the battery safety by virtue of the high-viscosity electrolyte formed by a process where the electrolyte-soluble polymer coated on one or both surfaces of the separator is dissolved by the injection of the electrolyte. Namely, oxygen generated by degradation of a cathode structure due to severe conditions, such as overcharge and high-temperature storage, will react with the inventive electrolyte having a relatively high viscosity other than the conventional electrolyte solution having high reactivity, so that the reactivity between the electrodes and the electrolyte can be reduced so as to decrease the generation of heat, thus improving the battery safety. Also, by the polar groups of the electrolyte-soluble polymer coated on the separator surface according to the present invention, the adhesion between the electrodes and the separator is increased so that the structural safety of the battery is maintained for a long period of time.

Second, the present invention allows the prevention of deterioration in the battery performance by the high-viscosity electrolyte formed by a process where the electrolyte-soluble polymer coated on one or both surfaces of the separator is dissolved by injection of the electrolyte. Namely, the electrolyte-soluble polymer dissolved in the electrolyte injected after assembling of the electrochemical device forms the high-viscosity electrolyte as described above, which shows an insignificant reduction in its ion conductivity according to an increase in its viscosity. Thus, the high-viscosity electrolyte can show ion conductivity equal to that of the prior liquid electrolytes, thus minimizing a reduction in the battery performance.

Moreover, the high-viscosity electrolyte can uniformly penetrate and distribute in the entire inside of the battery, including the surface and pores of both electrodes of the battery, the surface of electrode active materials in the battery, and the surface and pores of the separator. Thus, battery reaction by the transfer of lithium ions can occur in the entire inside of the battery, thus expecting an improvement in the battery performance. In addition, the electrolyte-soluble polymer coated on the inventive separator has an excellent affinity for the electrolyte, so that the wettability of the separator with the electrolyte can be increased, thus expecting an improvement in the battery performance.

Third, the high-viscosity electrolyte, which is formed by a process where the electrolyte-soluble polymer coated on one or both sides of the inventive separator is dissolved by the injection of the electrolyte, has an advantage in that it is easily produced since its production is possible by injecting a conventional low-viscosity electrolyte without directly injecting a high-viscosity electrolyte.

The polymer coated on one or both sides of the separator according to the present invention is not specially limited if it is soluble in an electrolyte. The electrolyte-soluble polymer has a solubility parameter of more than 18 [J^{1/2}/cm^{3/2}], and preferably 18.0 to 30 [J^{1/2}/cm^{3/2}]. This is because a polymer with the solubility parameter of less than 18 [J^{1/2}/cm^{3/2}] is not dissolved in a conventional electrolyte for batteries.

Furthermore, the dielectric constant of the electrolyte-soluble polymer is preferably as high as possible. The dissociation degree of salts in the electrolyte depends on the dielectric constant of the electrolyte solvent. Thus, an increase in the dielectric constant of the electrolyte-soluble polymer can lead to an increase in the dissociation degree of salts in the inventive high-viscosity electrolyte formed by dissolution of the polymer. The dielectric constant of the electrolyte-soluble polymer which can be used in the present invention is in a range of 1.0 to 100 (measurement frequency = 1 kHz), and preferably more than 10.

As the electrolyte-soluble polymer, polymers with a cyano (-CN), acrylate or acetate group are preferably used, and examples thereof include, but are not limited to, cyano group-containing polymers, pullulan, cellulose acetate, cellulose acetate butyrate, cellulose acetate propionate, polyethylene glycol, glyme, polyethylene glycol dimethylether, polyvinyl pyrrolidone or a mixture thereof. Particularly, the cyano-group containing polymers are preferred and examples thereof include, but are not limited to, cyanoethyl pullulan, cyanoethyl polyvinylalcohol, cyanoethyl cellulose, cyanoethyl sucrose and the like. In addition, any materials may also be used alone or in combination if they have the above-described properties.

The electrolyte-soluble polymer with high dielectric constant is preferably coated on one or both sides of the separator in a thickness ranging from 0.01 µm to 100 µm. If the electrolyte-soluble polymer is coated in a thickness of less than 0.01 µm, its effects on the improvement of battery safety and the prevention of deterioration in battery performance will be insufficient, and if the polymer is coated in a thickness of more than 100 µm, it will require a long period of time for its dissolution within the battery.

As a separator on which the electrolyte-soluble polymer with high dielectric constant is coated according to the present invention, separators conventional in the art may be used. However, porous substrates with pores are preferably used. This is because the presence of plural pores to be filled with an electrolyte can make ion transfer easy, resulting in an improvement in battery performance. Examples of the separator material include, but are not limited to, polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene, polyvinylidene fluoride, polyethylene oxide, polyacrylonitrile, polyvinylidene fluoride-hexafluoropropylene copolymer, polyethylene, polypropylene or combinations thereof. In addition, other polyolefin compounds may also be used.

The separator may be in a fabric or membrane form. In the case of the fabric, it is preferably a nonwoven fabric forming porous webs, which is a spunbond or meltblown fabric made of filament fibers.

Although the pore size and porosity of the separator are not specifically limited, it is preferable that the porosity should be in a range of 5-95% and the pore size (diameter) should be in a range of 0.01-10 µm. If the pore size and the porosity are less than 0.01 µm and less than 5%, respectively, the battery performance can be deteriorated due to a reduction in the migration of the electrolyte. If the pore size and the porosity exceed 10 µm and 95%, respectively, it will be difficult to maintain the mechanical properties of the separator, and a possibility for cathode and anode to be internally short-circuited will be increased. Furthermore, the thickness of the separator is not greatly limited, but is preferably in a range of 1-100 µm, and more preferably 5-50 µm. At a separator thickness of less than 1 µm, it will be difficult to maintain the mechanical properties of the separator, and at a separator thickness of more than 100 µm, the separator will act as a resistance layer.

An electrochemical device including the separator having the electrolyte-soluble polymer coated thereon can be produced by a conventional method known in the art. In one embodiment, the electrochemical device is produced by a method comprising the steps of: (a) coating the electrolyte-soluble polymer on one or both sides of the separator and drying the coated polymer; (b) interposing the separator produced in the step (a) between a cathode and an anode so as to assemble an electrochemical device; and (c) injecting an liquid electrolyte into the electrochemical device produced in the step (b).
1) The separator coated with the electrolyte-soluble polymer can be produced by a conventional method known in the art. In one embodiment thereof, the electrolyte-soluble polymer is dissolved in a suitable solvent, and then, the polymer solution is coated on one or both sides of the separator and dried by volatilization of the solvent.

Although the solvent is not specifically limited to any solvent, it is preferable to use a solvent which has a solubility parameter similar to and a lower boiling point than that of an electrolyte-soluble polymer to be used. This is because such a solvent is uniformly mixed with the polymer and can be easily removed in a subsequent stage. Examples of the solvent which can be used in the present invention include, but are not limited to, acetone, tetrahydrofuran, methylene chloride, chloroform, dimethylformamide, N-methyl-2-pyrrolidone (NMP), cyclohexane, water or a mixture thereof.

The amount of the electrolyte-soluble polymer coated on the separator may be selected in view of the battery performance and safety.

The polymer solution may be coated on the separator by a conventional coating method known in the art. Preferred examples of the coating method include dip coating, die coating, roll coating, comma coating or a combination thereof.
2) The separator produced as described above is interposed between a cathode and an anode so as to assemble an electrochemical device.

As a process by which the inventive separator having the electrolyte-soluble polymer film coated thereon is applied to a battery, not only a winding process but also a lamination and folding process between the separator and the electrodes may be used. It is preferable that the inventive separator having the electrolyte-soluble polymer coated thereon can be adhered to the electrodes. The adhesion between the separator and the electrodes greatly depends on the physical properties of the polymer coated on the separator. Particularly, as the polymer shows an increase in polarity and a reduction in glass transition temperature (Tg) or melting temperature (Tm), the inventive separator will be easily adhered to the electrodes.
3) When an electrolyte is injected into the electrochemical device assembled by interposing the electrolyte-soluble polymer-coated separator between the cathode and anode, the electrolyte-soluble polymer coated on the separator will be dissolved by injection of the electrolyte so as to form the inventive high-viscosity electrolyte, as shown in FIG. 1.

The inventive electrolyte which combines both the advantages of the prior liquid-type and gel-type electrolytes as described above can uniformly penetrate not only pores which are present on the surface of the two electrodes, between active materials in the electrodes, but also the surface or pores of the separator, as shown in FIG. 1. This can provide an improvement in the battery safety and performance.

The inventive high-viscosity electrolyte formed after the electrolyte-soluble polymer coated on the separator is dissolved in the liquid electrolyte contains the electrolyte-soluble polymer at an amount of 0.01 wt% to 20 wt%, based on the composition of the liquid electrolyte before the liquid electrolyte has been introduced into the battery. If the electrolyte-soluble polymer is contained at an amount of more than 20 wt%, its dissolution by the electrolyte will require a too long time so that the dissolution cannot be completed within the desired time, thus causing deterioration in the battery performance.

Also, the viscosity of the high-viscosity electrolyte is preferably at least 0.01 cP higher at 25 °C than that of the electrolyte before the electrolyte-soluble polymer is dissolved by the liquid electrolyte.

The electrochemical devices prepared by the above-described method include all devices in which electrochemical reactions occur. Specific examples of such devices include primary and secondary batteries, fuel batteries, solar batteries, and capacitors. Particularly, among the secondary batteries, lithium secondary batteries, including lithium metal secondary batteries, lithium ion secondary batteries, lithium polymer secondary batteries and lithium ion polymer secondary batteries, are preferred.

The cathode which can be used in the present invention can be prepared in a form where a cathode active material is bound to a positive current collector according to a conventional method. Non-limited examples of the cathode active material include conventional cathode active materials known in the art, which can be used in the cathode of the prior electrochemical devices, as well as lithium-adsorbing materials, such as lithium manganese oxide, lithium cobalt oxide, lithium nickel oxide or composite oxides formed of a combination thereof. Non-limited examples of the positive current collector include foils made of aluminum, nickel or a combination thereof.

Furthermore, the anode which can be used in the present invention can be prepared in a form where a anode active material is bound to a negative current collector in the same manner as in the preparation of the cathode. Non-limited examples of the anode active material include conventional anode active material known in the art, which can be used in the anode of the prior electrochemical devices, as well as lithium-adsorbing materials, such as lithium alloys, carbon, petroleum coke, graphite or other carbons. Non-limited examples of the negative current collector include foils made of copper, gold, nickel, copper alloy or a combination thereof.

Examples of the liquid electrolyte which can be used in the present invention include, but are not limited to, conventional electrolytes known in the art, which can be used as an electrolyte for the prior electrochemical devices, as well as those in which salts of a formula such as A⁺B⁻, wherein A⁺ contains an ion selected from alkaline metal cations, such as Li⁺, Na⁺ and K⁺, and combinations thereof, and B⁻ contains an ion selected from anions, such as PF₆⁻, BF₄⁻, Cl⁻, Br⁻, I⁻, Clo₄⁻, ASF₆⁻, CH₃CO₂⁻, CF₃SO₃⁻ N(CF₃SO₂)₂⁻, and C(CF₂SO₂)₃⁻, and combinations thereof, are dissolved or dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), γ-butyrolactone and a mixture thereof.

Also, the present invention provides an electrochemical device, and preferably a lithium secondary battery, which comprises (a) a cathode, (b) an anode, (c) a separator and (d) a liquid electrolyte, in which the separator has an electrolyte-soluble polymer, which is soluble in liquid electrolyte, coated on one or both sides of the separator.

In this case, the separator acts as both a separator and an electrolyte in the same manner as in the present invention.

### Best Mode for Carrying Out the Invention

Hereinafter, the present invention will be described in more detail by way of the following examples. It is to be understood, however, that these examples are given for illustrative purpose only and are not intended to limit the scope of the present invention.

### Reference Example 1: Measurement of viscosity and ion conductivity of electrolyte in which electrolyte-soluble polymer has been dissolved

Changes in the viscosity and ion conductivity of an electrolyte with a change in the concentration of an electrolyte-soluble polymer in the electrolyte were measured. Cyanoethyl pullulan was used as the electrolyte-soluble polymer, and a 3/2/5 (weight ratio) mixture of EC/PC/DEC with a LiPF₆ concentration of 1M was used as the electrolyte. The concentrations of cyanoethyl pullulan in the electrolyte were controlled to 0 wt%, 5 wt% and 10 wt%.

Changes in the viscosity and ion conductivity of the electrolyte with a change in the concentration of cyanoethyl pullulan were measured, and the measurement results are shown in FIG. 2. As shown in FIG. 2, it could be found that the viscosity of the electrolyte was greatly increased by dissolution of a small amount of the electrolyte-soluble polymer (cyanoethyl pullulan), but there was a very insignificant reduction in the ion conductivity.

### [Examples 1-2: Production of separator coated with electrolyte-soluble polymer and lithium secondary battery including the same]

### Example 1

### 1-1) Production of separator coated with cyanoethyl pullulan

Cyanoethyl pullulan (degree of polymerization of about 600) was dissolved in acetone, and the solution was coated on the surface of a three-layer separator consisting of polypropylene/polyethylene/polypropylene (PP/PE/PP) by a dip coating method. Then, the coated polymer was dried at ambient temperature and dried in hot air at 100 °C so as to produce a final separator. The thickness of the electrolyte-soluble polymer film coated on the surface of the separator was about 1 µm.

### 1-2) Production of lithium secondary battery

### (Production of anode)

Carbon powder as a anode active material, polyvinylidene fluoride (PVDF) as a binder, and carbon black as a conductive material were added to a N-methyl-2-pyrrolidone (NMP) solvent at amounts of 93 wt%, 6 wt% and 1 wt%, respectively, so as to produce a mixture slurry for anode. The mixture slurry was applied on a 10µm thick copper (Cu) thin film as a negative current collector, and dried to produce an anode which was then roll-pressed.

### (Production of cathode)

94 wt% of lithium cobalt composite oxide as a cathode active material, 3 wt% of carbon black as a conductive material and 3 wt% of PVDF as a binder were added to a N-methyl-2-pyrrolidone (NMP) solvent so as to produce a mixture slurry for cathode. The mixture slurry was applied on a 20µm thick aluminum (A1) thin film as a positive current collector, and dried to produce a cathode which was then roll-pressed.

### (Battery assembling)

The electrodes produced as described above and the separator produced in the above part 1-1) were assembled into a battery structure by a stacking method. Then, an electrolyte (ethylene carbonate (EC)/propylene carbonate (PC) = 50/50 vol%) containing 1M of lithium hexafluorophosphate (LiPF₆) was injected into the battery structure so as to produce a final battery.

### Example 2: Production of separator coated with cyanoethyl polyvinyl alcohol and lithium secondary battery

A separator and a lithium secondary battery were produced in the same manner as in Example 1 except that cyanoethyl polyvinyl alcohol as the electrolyte-soluble polymer was used in place of cyanoethyl pullulan.

### [Comparative Examples 1-2]

### Comparative Example 1: Production of separator introduced with polyvinylidene fluoride-hexafluoropropylene (PVDF-HFP) copolymer and lithium secondary battery

A separator and a lithium secondary battery were produced in the same manner as in Example 1 except that a polyvinylidene fluoride-hexafluoropropylene (PVDF-HFP) copolymer as an electrolyte-insoluble polymer was used in place of cyanoethyl pullulan as the electrolyte-soluble polymer.

### Comparative Example 2: Production of separator introduced with no electrolyte-soluble polymer, and lithium secondary battery

A lithium secondary battery was produced in the same manner as in Example 1 except that a three-layer separator (PP/PE/PP) was used without coating with the electrolyte-soluble polymer.

### Test Example 1: Evaluation of wettability of separator with electrolyte

The separator coated with the electrolyte-soluble polymer according to the present invention was evaluated for wettability with an electrolyte as follows.

The separators produced in Examples 1 and 2 using cyanoethyl pullulan and cyanoethyl polyvinyl alcohol as the electrolyte-soluble polymers, respectively, were used as test groups. Also, the separator produced in Comparative Example 1 using PVDF-HFP as the electrolyte-insoluble polymer was used as a control group. Among electrolytes for used in batteries, an EC/PC (1:1 volume ratio) electrolyte containing 1M LiPF₆ dissolved therein, which has been rarely used due to its very high polarity and viscosity, was used. The separators were subjected to drop tests using this electrolyte so as to evaluate the wettability of the separators with the electrolyte.

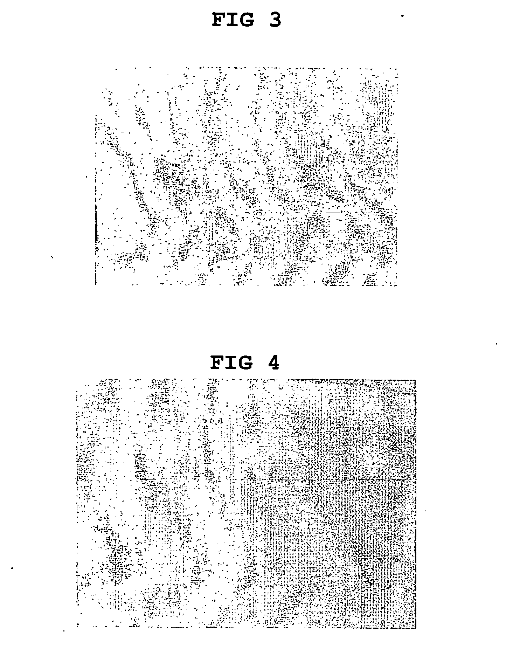

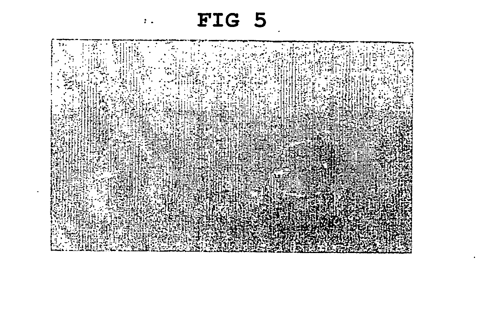

The test results showed that the separator produced in Comparative Example 1 by coating with the electrolyte-insoluble polymer was not completely wet with the electrolyte (see FIG. 5). On the other hand, it could be found that the separators produced in Examples 1 and 2 using the electrolyte-soluble polymers were wet with the EC/PC (1:1 volume ratio) electrolyte containing 1M LiPF₆ (see FIGS. 3 and 4).

### Test Example 2: Evaluation of thermal safety of lithium secondary battery

The thermal safety of the lithium secondary battery including the separator coated with the electrolyte-soluble polymer according to the present invention was evaluated in the following manner.

The lithium secondary batteries of Examples 1 and 2 including the separators coated with cyanoethyl pullulan and cyanoethyl polyvinyl alcohol as the electrolyte-soluble polymers, respectively, were used as test groups. Also, the lithium secondary battery of Comparative Example 2 including the separator uncoated with the electrolyte-soluble polymer was used as a control group.

Each of the batteries was charged to 4.2 V and then disassembled to separate the cathode only. The resulting cathode was evaluated for thermal safety up to 350 °C using differential scanning calorimetry(DSC), and the evaluation results are given in Table 1 below.

The test results showed that the inventive lithium secondary batteries of Examples 1 and 2 had improved thermal safety as compared with the battery of Comparative Example 2 (see Table 1). This indicates that oxygen generated by the degradation of the cathode structure caused by external impacts such as overcharge or high-temperature storage reacts with the high-viscosity electrolyte other than the conventional electrolyte with high reactivity, such that the side reaction between the electrode and the electrolyte so as to reduce the generation of heat.

Accordingly, it could be found that the lithium secondary battery including the high-viscosity electrolyte formed using the inventive separator coated with the electrolyte-soluble polymer was excellent in thermal safety.

**[Table 1]**

| Battery | ΔH (J/g) |
|---|---|
| Example 1 | 117.3 |
| Example 2 | 120.3 |
| Comparative Example 2 | 150.4 |

### Test Example 3: Evaluation of performance of lithium secondary battery

The performance of the lithium secondary battery including the separator coated with the electrolyte-soluble polymer according to the present invention was evaluated in the following manner.

The lithium secondary batteries of Examples 1 and 2 including the separators coated with cyanoethyl pullulan and cyanoethyl polyvinyl alcohol as the electrolyte-soluble polymers, respectively, were used as test groups. Also, the lithium secondary battery of Comparative Example 2 including the separator uncoated with the electrolyte-soluble polymer was used as a control group. Each of the batteries was measured for capacity and C-rate, and the measurement results are given in Table 2 below.

As shown in Table 2, the lithium secondary batteries of Examples 1 and 2 in which the separator had been coated with the electrolyte-soluble polymer was highly excellent in performance as compared to the battery of Comparative Example 2 including the prior separator.

**[Table 2]**

| Evaluation items | Example 1 | Example 2 | Comparative Example 2 |
|---|---|---|---|
| Initial charge capacity (mAh/g) | 120.6 | 115.3 | 103.7 |
| Initial discharge capacity (mAh/g) | 117.2 | 111.6 | 99.9 |
| Initial efficiency (%) | 97.2 | 96.8 | 96.3 |
| C-rate (1C/0.2C) | 90.3 | 89.5 | 62.2 |
| C-rate (2C/0.2C) | 68.1 | 65.2 | 17.7 |

## Claims

1. A separator for a lithium secondary battery on which an electrolyte-soluble polymer, which is soluble in liquid electrolyte, is coated on one or both surfaces of the separator, wherein the electrolyte-soluble polymer is at least one selected from the group consisting of cyanoethyl pullulan, cyanoethyl polyvinyl alcohol, cyanoethyl cellulose and cyanoethyl sucrose, and the electrolyte-soluble polymer is dissolved after injection of the liquid electrolyte, wherein the high-viscosity electrolyte formed after the electrolyte-soluble polymer coated on the separator is dissolved in the liquid electrolyte contains the electrolyte-soluble polymer in an amount of 0.01-20% by wt. based on the composition of the liquid electrolyte before injection of the liquid electrolyte into the battery, the viscosity of this high-viscosity electrolyte being at least 0.01 cP higher at 25°C than that of the electrolyte before the electrolyte-soluble polymer is dissolved in the liquid electrolyte.

2. A separator according to Claim 1, wherein the electrolyte-soluble polymer has a solubility parameter ranging from 18 to 30 [J^{1/2}/cm^{3/2}] depending on a liquid electrolyte to be used, wherein the liquid electrolyte comprises a salt of the following formula (I) dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC) and y-butyrolactone:
A⁺B⁻ (I)
wherein A⁺ contains an ion selected from alkaline metal cations and their combinations, and B⁻ contains an ion selected from anions and their combinations.

3. A separator according to Claim 1, wherein the electrolyte-soluble polymer has a dielectric constant of more than 10 at a measurement frequency of 1 kHz.

4. A separator according to Claim 1, wherein the electrolyte-soluble polymer is coated with a thickness of 0.01 to 100µm.

5. A separator according to Claim 1, wherein the separator is a porous structure with pores.

6. A separator according to Claim 1, wherein the separator is formed from at least one selected from the group consisting of polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene, polyethylene, polypropylene, polyvinylidene fluoride, polyethylene oxide, polyacrylonitrile and polyvinylidene fluoride-hexafluoropropylene copolymer.

7. An electrochemical device comprising:
(a) a cathode,
(b) an anode, and
(c) a separator as defined in Claim 1.

8. An electrochemical device according to Claim 7, wherein the electrolyte is uniformly distributed in not only pores which are present on the surface of the two electrodes, between electrode active materials or in electrodes, but also the surface and pores of the separator.

9. An electrochemical device according to Claim 7, wherein the liquid electrolyte comprises a salt of the following formula (I) dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N- methyl-2-pyrrolidone (NMP), ethylmethyl carbonate (EMC) and y-butyrolactone:
A⁺B⁻ (I)
wherein A⁺ contains an ion selected from alkaline metal cations and their combinations, and B⁻ contains an ion selected from anions and their combinations.

10. An electrochemical device according to Claim 7, which is a lithium secondary battery.

11. A method for producing an electrochemical device comprising the steps of:
(a) coating an electrolyte-soluble polymer, which is soluble in liquid electrolyte, on one or both surfaces of a separator, wherein the electrolyte-soluble polymer is at least one selected from the group consisting of cyanoethyl pullulan, cyanoethyl polyvinyl alcohol, cyanoethyl cellulose and cyanoethyl sucrose;
(b) interposing the separator produced in step (a) between a cathode and an anode so as to assemble an electrochemical device; and
(c) injecting a liquid electrolyte into the electrochemical device produced in step (b) whereby the electrolyte-soluble polymer dissolves in the electrolyte to form a high-viscosity electrolyte which contains 0.01-20% by wt. of the electrolyte-soluble polymer based on the composition of the liquid electrolyte before injection of the liquid electrolyte into the electrochemical device, the viscosity of the high-viscosity electrolyte being at least 0.01 cP higher at 25°C than that of the electrolyte before the electrolyte-soluble polymer is dissolved by the liquid electrolyte.

12. A method according to Claim 11, wherein the electrolyte-soluble polymer is coated in step (a) by dip coating, dye coating, roll coating, comma coating or any combination thereof.

13. A method according to Claim 11, wherein the electrochemical device is a lithium secondary battery.

## Patentansprüche

1. Separator für ein Lithiumsekundärelement, auf dem ein elektrolytlösliches Polymer, das in einem flüssigen Elektrolyten löslich ist, auf einer oder beiden Seiten des Separators aufgetragen ist, wobei das elektrolytlösliche Polymer mindestens eines ist, ausgewählt aus der Gruppe bestehend aus Cyanoethylpullulan, Cyanoethylpolyvinylalkohol, Cyanoethylcellulose und Cyanoethylsucrose, und das elektrolytlösliche Polymer nach Injektion des flüssigen Elektrolyten aufgelöst wird, wobei der hochviskose Elektrolyt, der gebildet wird nachdem das auf dem Separator aufgetragene elektrolytlösliche Polymer in dem flüssigen Elektrolyten aufgelöst worden ist, das elektrolytlösliche Polymer in einer Menge von 0,01 bis 20 Gew.-%, bezogen auf die Zusammensetzung des flüssigen Elektrolyten vor der Injektion des flüssigen Elektrolyten in das Element, enthält, und wobei die Viskosität des hochviskosen Elektrolyten bei 25°C mindestens 0,01 cP höher ist als die des Elektrolyten bevor das elektrolytlösliche Polymer in dem flüssigen Elektrolyten aufgelöst wird.

2. Separator gemäß Anspruch 1, wobei das elektrolytlösliche Polymer einen Löslichkeitsparameter von 18 bis 30 [J^{1/2}/cm^{3/2}] in Abhängigkeit von dem verwendeten flüssigen Elektrolyten hat, wobei der flüssige Elektrolyt ein Salz der folgenden Formel (I) umfasst, das in einem organischen Lösungsmittel, ausgewählt aus der Gruppe bestehend aus Propylencarbonat (PC), Ethylencarbonat (EC), Diethylcarbonat (DEC), Dimethylcarbonat (DMC), Dipropylcarbonat (DPC), Dimethylsulfoxid, Acetonitril, Dimethoxyethan, Diethoxyethan, Tetrahydrofuran, N-Methyl-2-pyrrolidon (NMP), Ethylmethylcarbonat (EMC) und γ-Butyrolacton, dissoziiert ist:
A⁺B (I)
wobei A⁺ ein Ion enthält, das aus Alkalimetallkationen und deren Kombinationen ausgewählt ist, und B⁻ ein Ion enthält, das aus Anionen und deren Kombinationen ausgewählt ist.

3. Separator gemäß Anspruch 1, wobei das elektrolytlösliche Polymer eine dielektrische Konstante von mehr als 10 bei einer Messfrequenz von 1 kHz hat.

4. Separator gemäß Anspruch 1, wobei das elektrolytlösliche Polymer mit einer Dicke von 0,01 bis 100 µm aufgetragen ist.

5. Separator gemäß Anspruch 1, wobei der Separator eine poröse Struktur mit Poren ist.

6. Separator gemäß Anspruch 1, wobei der Separator aus mindestens einer Verbindung, ausgewählt aus der Gruppe bestehend aus Polyethylenterephthalat, Polybutylenterephthalat, Polyester, Polyacetal, Polyamid, Polycarbonat, Polyimid, Polyetheretherketon, Polyethersulfon, Polyphenylenoxid, Polyphenylensulfid, Polyethylennaphthalin, Polyethylen, Polypropylen, Polyvinylidenfluorid, Polyethylenoxid, Polyacrylnitril und Polyvinylidenfluorid-Hexafluorpropylen-Copolymer, gebildet wird.

7. Elektrochemische Vorrichtung, die umfasst:
(a) eine Kathode,
(b) eine Anode und
(c) einen Separator wie in Anspruch 1 definiert.

8. Elektrochemische Vorrichtung gemäß Anspruch 7, wobei der Elektrolyt nicht nur in den Poren, die auf der Oberfläche der beiden Elektroden, zwischen den Elektroden-Aktivmaterialien oder in den Elektroden vorhanden sind, gleichmäßig verteilt ist, sondern auch auf der Oberfläche und in den Poren des Separators.

9. Elektrochemische Vorrichtung gemäß Anspruch 7, wobei der flüssige Elektrolyt ein Salz der folgenden Formel (I) umfasst, das in einem organischen Lösungsmittel, ausgewählt aus der Gruppe bestehend aus Propylencarbonat (PC), Ethylencarbonat (EC), Diethylcarbonat (DEC), Dimethylcarbonat (DMC), Dipropylcarbonat (DPC), Dimethylsulfoxid, Acetonitril, Dimethoxyethan, Diethoxyethan, Tetrahydrofuran, N-Methyl-2-pyrrolidon (NMP), Ethylmethylcarbonat (EMC) und γ-Butyrolacton, dissoziiert ist:
A⁺B⁻ (I)
wobei A⁺ ein Ion enthält, das aus Alkalimetallkationen und deren Kombinationen ausgewählt ist, und B⁻ ein Ion enthält, das aus Anionen und deren Kombinationen ausgewählt ist.

10. Elektrochemische Vorrichtung gemäß Anspruch 7, die ein Lithiumsekundärelement ist.

11. Verfahren zur Herstellung einer elektrochemischen Vorrichtung, das die Schritte umfasst von:
(a) Auftragen eines elektrolytlöslichen Polymers, das in einem flüssigen Elektrolyten löslich ist, auf eine oder beide Oberflächen eines Separators, wobei das elektrolytlösliche Polymer mindestens eines ist, ausgewählt aus der Gruppe bestehend aus Cyanoethylpullulan, Cyanoethylpolyvinylalkohol, Cyanoethylcellulose und Cyanoethylsucrose;
(b) Einfügen des in dem Schritt (a) hergestellten Separators zwischen eine Kathode und eine Anode, so dass eine elektrochemische Vorrichtung aufgebaut wird; und
(c) Injizieren eines flüssigen Elektrolyten in die in Schritt (b) hergestellte elektrochemische Vorrichtung, wobei sich das elektrolytlösliche Polymer in dem Elektrolyten auflöst, um einen hochviskosen Elektrolyten zu bilden, der 0,01 bis 20 Gew.-% des elektrolytlöslichen Polymers, bezogen auf die Zusammensetzung des flüssigen Elektrolyten vor der Injektion des flüssigen Elektrolyten in die elektrochemische Vorrichtung, enthält, und wobei die Viskosität des hochviskosen Elektrolyten bei 25°C mindestens 0,01 cP höher ist als die des Elektrolyten bevor das elektrolytlösliche Polymer durch den flüssigen Elektrolyten aufgelöst wird.

12. Verfahren gemäß Anspruch 11, worin das elektrolytlösliche Polymer in Schritt (a) durch Tauchbeschichtung, Farbstoffbeschichtung, Rollenbeschichtung, Kommabeschichtung (comma coating) oder jede Kombination davon aufgetragen wird.

13. Verfahren gemäß Anspruch 11, worin die elektrochemische Vorrichtung ein Lithiumsekundärelement ist.

## Revendications

1. Séparateur destiné à une batterie secondaire au lithium sur lequel un polymère soluble dans un électrolyte, qui est soluble dans un électrolyte liquide, est revêtu sur une ou deux surfaces du séparateur, où le polymère soluble dans un électrolyte est au moins un élément choisi dans le groupe constitué de pullulane cyanoéthylé, alcool polyvinylique cyanoéthylé, cellulose cyanoéthylé et de sucrose cyanoéthylé, et le polymère soluble dans un électrolyte est dissous après injection de l'électrolyte liquide, où l'électrolyte à haute viscosité formé après que le polymère soluble dans un électrolyte revêtu sur le séparateur a été dissous dans l'électrolyte liquide, contient le polymère soluble dans un électrolyte en une teneur allant de 0,01 à 20 % en poids sur la base de la composition de l'électrolyte liquide avant injection de l'électrolyte liquide dans la batterie, la viscosité de cet électrolyte à haute viscosité étant plus grande d'au moins 0,01 cP à 25°C que celle de l'électrolyte avant que le polymère soluble dans un électrolyte soit dissous dans l'électrolyte liquide.

2. Séparateur selon la revendication 1, dans lequel le polymère soluble dans un électrolyte a un paramètre de solubilité allant de 18 à 30 [J^{1/2}/cm^{1/2}] dépendant d'un électrolyte liquide à utiliser, dans lequel l'électrolyte liquide comprend un sel de la formule suivante (I) dissocié dans un solvant organique choisi dans le groupe constitué de carbonate de propylène (PC), carbonate d'éthylène (EC), carbonate de diéthyle (DEC), carbonate de diméthyle (DMC), carbonate de dipropyle (DPC), diméthyle sulfoxyde, acétonitrile, diméthoxyéthane, diéthoxyéthane, tétrahydrofuranne, N-méthyl-2-pyrrolidone (NMP), carbonate d'éthylméthyle (EMC) et de y-butyrolactone :
A⁺B⁻ (I)
où A⁺ contient un ion choisi parmi des cations de métaux alcalins et de leurs combinaisons, et B⁻ contient un ion choisi parmi des anions et de leurs combinaisons.

3. Séparateur selon la revendication 1, dans lequel le polymère soluble dans un électrolyte a une constante diélectrique supérieure à 10 à une fréquence de mesure de 1 kHz.

4. Séparateur selon la revendication 1, dans lequel le polymère soluble dans un électrolyte est revêtu avec une épaisseur de 0,01 à 100 µm.

5. Séparateur selon la revendication 1, dans lequel le séparateur est une structure poreuse avec des pores.

6. Séparateur selon la revendication 1, dans lequel le séparateur est formé à partir d'au moins un élément choisi dans le groupe constitué de polyéthylène téréphtalate, polybutylène téréphtalate, polyester, polyacétal, polyamide, polycarbonate, polyimide, polyétheréthercétone, polyéthersulfone, oxyde de polyphénylène, sulfure de polyphénylène, polyéthylène naphtalène, polyéthylène, polypropylène, fluorure de polyvinylidène, oxyde de polyéthylène, polyacrylonitrile et du copolymère de fluorure de polyvinylidène-hexafluoropropylène.

7. Dispositif électrochimique comprenant :
(a) une cathode,
(b) une anode, et
(c) un séparateur tel que défini dans la revendication 1.

8. Dispositif électrochimique selon la revendication 7, dans lequel l'électrolyte est distribué de manière uniforme dans non seulement des pores qui sont présents sur la surface des deux électrodes, entre les deux matières actives des électrodes ou dans des électrodes, mais aussi dans la surface et les pores du séparateur.

9. Dispositif électrochimique selon la revendication 7, dans lequel l'électrolyte liquide comprend un sel de la formule suivante (I) dissocié dans un solvant organique choisi dans le groupe constitué de carbonate de propylène (PC), carbonate d'éthylène (EC), carbonate de diéthyle (DEC), carbonate de diméthyle (DMC), carbonate de dipropyle (DPC), diméthyle sulfoxyde, acétonitrile, diméthoxyéthane, diéthoxyéthane, tétrahydrofuranne, N-méthyl-2-pyrrolidone (NMP), carbonate d'éthylméthyle (EMC) et de y-butyrolactone :
A⁺B⁻ (I)
où A⁺ contient un ion choisi parmi des cations de métaux alcalins et de leurs combinaisons, et B⁻ contient un ion choisi parmi des anions et de leurs combinaisons.

10. Dispositif électrochimique selon la revendication 7, qui est une batterie secondaire au lithium.

11. Procédé pour produire un dispositif électrochimique comprenant les étapes consistant:
(a) à revêtir un polymère soluble dans un électrolyte, qui est soluble dans un électrolyte liquide, sur une ou deux surfaces d'un séparateur, où le polymère soluble dans un électrolyte est au moins choisi dans le groupe constitué de pullulane cyanoéthylé, alcool polyvinylique cyanoéthylé, cellulose cyanoéthylé et sucrose cyanoéthylé ;
(b) à interposer le séparateur produit dans l'étape (a) entre une cathode et une anode afin d'assembler un dispositif électrochimique ; et
(c) à injecter un électrolyte liquide dans le dispositif électrochimique produit dans l'étape (b) grâce à quoi le polymère soluble dans un électrolyte se dissout dans l'électrolyte pour former un électrolyte à haute viscosité qui contient de 0,01 à 20% en poids de polymère soluble dans un électrolyte sur la base de la composition de l'électrolyte liquide avant injection de l'électrolyte liquide dans le dispositif électrochimique , la viscosité de l'électrolyte à haute viscosité étant plus grande d'au moins 0,01 cP à 25°C que celle de l'électrolyte avant que le polymère soluble dans un électrolyte soit dissous par l'électrolyte liquide.

12. Procédé selon la revendication 11, dans lequel le polymère soluble dans un électrolyte est revêtu dans l'étape (a) par un revêtement au trempé, un revêtement de filière, un revêtement au rouleau, un revêtement de virgule ou une combinaison quelconque de ceux-ci.

13. Procédé selon la revendication 11, dans lequel le dispositif électrochimique est une batterie secondaire au lithium.
